# EUROPEAN PATENT SPECIFICATION

(11) **EP 1 516 806 B1**
(45) Date of publication and mention of the grant of the patent: **09.07.2008**
(21) Application number: 04021738.2
(22) Date of filing: 13.09.2004
(51) Int. Cl.: B62K 5/04

(54) **Roll control device for rolling type vehicle**
Rollregelungssystem für ein Fahrzeug mit Rollbewegung
Système de commande du roulis pour un véhicule à roulis

(30) Priority: 17.09.2003 JP 2003324810
(43) Date of publication of application: 23.03.2005
(73) Proprietor: HONDA MOTOR CO., LTD., Tokyo (JP)
(72) Inventor: Ieda, Yoshihisa, 4-1 Chuo 1-chome Wako-shi, Saitama-ken (JP); Tomoda, Akihiko, 4-1 Chuo 1-chome Wako-shi, Saitama-ken (JP); Takayanagi, Shinji, 4-1 Chuo 1-chome Wako-shi, Saitama-ken (JP)
(74) Representative: Rupp, Christian

(56) References cited:
- EP-A- 0 004 230
- EP-A- 0 369 863
- US-A- 3 601 213

## Description

The present invention relates to a roll control device for a rolling type vehicle.

Among rolling types of vehicles in which, for example, a front vehicle body and a rear vehicle body roll relative to each other in a lateral direction, a type of vehicle has been known in which the rolling motion of the front vehicle body and the rear vehicle body is locked under certain operating condition to render the vehicle self standing (See, for example, Japanese Unexamined Patent Publication No. Sho 59-179467 and Japanese Unexamined Patent Publication No. Sho 54-67937). There also is a type of vehicle in which the rolling motion is not locked, but a moment to control the rolling motion is applied to a vehicle body (See, for example, Japanese Unexamined Patent Publication No. Sho 59-149878). Such a roll control device includes a torque application mechanism which causes the vehicle body to generate a rolling moment. The roll control device computes the rolling angle of the vehicle body based on the steering angle and the vehicle speed, and controls the operation of the torque application mechanism to generate a rolling moment to achieve the computed rolling angle.

However, with the aforesaid roll control device, since the rolling angle of the vehicle body is controlled based on the steering angle and the vehicle speed as parameters, there is a problem of a changing vehicle attitude depending on the inclination of ground surface while executing a turn.

Therefore, it is an object of the present invention to provide a roll control device for a rolling type vehicle, which can control the rolling angle of the vehicle without being affected by the inclination of the ground surface.

This object is solved by a roll control device having the features of claim 1 or claim 2. Preferred embodiments of the invention are defined in the dependent claims.

As a solution to the aforesaid problem, a roll control device (for example, the roll control devices 250, 350 in the embodiments) for a three-wheeled or four-wheeled rolling type vehicle (for example, motorized three-wheeled vehicles 10, 310 in the embodiments) having a front vehicle body and a rear vehicle body which roll relative to each other in lateral direction. The invention defined in claim 1 is characterized in that the angle of force acting on a non-rolling side vehicle body (for example, the vehicle body 16 in the embodiments) is detected by a tilt sensor (for example, the tilt sensor 252 in the embodiments) which is disposed on said non-rolling side vehicle body, the force being the resultant force of gravity and the centrifugal force acting on any of the rolling side vehicle body and the non-rolling side vehicle body, the relative roll angle between the non-rolling side vehicle body and the rolling side vehicle body is detected by a roll angle sensor (for example, the roll angle sensor 353 in the embodiments) which is disposed on said rolling side vehicle body, and based on the detected force angle and the relative roll angle which are controlled by means of a control circuit, the force angle relative to the center plane of the rolling side vehicle body becomes zero (0) by means of a torque application mechanism. Thus, the falling moment and the rising moment generated in the rolling side vehicle can be balanced out.

According to this roll control device, when the rolling type vehicle executes a turn with the rolling side vehicle body rolled, a torque application mechanism disposed, for example, between the rolling side vehicle body and the non-rolling side vehicle body suitably produces a rolling moment on the rolling side vehicle body. At this time, by controlling the relative roll angle between the rolling side vehicle body and the non-rolling side vehicle body based on the angle of force applied to the rolling side vehicle body or the non-rolling side vehicle body, the relative roll angle can be controlled without being affected by the inclination of the ground surface.

The invention defined in claim 2 is characterized in that the angle of force acting on a rolling side vehicle body (for example, the vehicle body 16 in the embodiments) is detected by a tilt sensor (for example, the tilt sensor 252 in the embodiments) which is disposed on said rolling side vehicle body, the force being the resultant force of gravity and the centrifugal force acting on any of the rolling side vehicle body and the non-rolling vehicle body, and based on the detected force angle used as zero (0) reference value, the rolling side vehicle body is controlled by means of a control circuit so that the centre plane of the rolling side vehicle body becomes parallel with the zero (0) reference value by means of a torque application mechanism.

As described in claim 3, by providing a motor (for example, a torque motor 258 in the embodiments) between the rolling side vehicle body and the non-rolling side vehicle body, the motor being for controlling the relative roll angle between them, and by making use of the motor as a driving source for the torque application mechanism, a fine, linear and real-time control of the relative roll angle becomes possible.

Further, as described in claim 4, by controlling the relative roll angle to balance out the falling moment and the rising moment while the rolling type vehicle is traveling at a low speed, the vehicle balancing while traveling at a low speed which requires operation of handlebar and the like can be well assisted.

According to the invention described in claim 1 or claim 2, since the relative roll angle can be controlled without being affected by the inclination of ground surface, and the falling moment and the rising moment can be balanced out, the vehicle balancing of the rolling type vehicle can be well assisted.

According to the invention described in claim 3, by controlling the relative roll angle between the rolling side vehicle body and the non-rolling side vehicle body by the motor, linear and real-time control becomes possible.

According to the invention of claim 4, the vehicle balancing of the rolling type vehicle particularly at the time while traveling at a low speed can be well assisted.

Embodiments of the present invention will be described hereunder with reference to accompanying drawings. The designations of orientation of left, right, fore, aft and the like are same as in the vehicle.
Fig. 1 is a side view of a motorized three-wheeled vehicle according to the embodiment of the present invention.
Fig. 2 is a plan view of the motorized three-wheeled vehicle.
Fig. 3 is a fragmentary side view of Fig. 1.
Fig. 4 is a fragmentary plan view of Fig. 2.
Fig. 5 is a rear view of the motorized three-wheeled vehicle.
Fig. 6 is a rear view showing the rear suspension of the motorized three-wheeled vehicle.
Fig. 7 is a first operation explanatory drawing for explaining the operation of the rear suspension.
Fig. 8 is a second operation explanatory drawing for explaining the operation of the rear suspension.
Fig. 9 is a third operation explanatory drawing for explaining the operation of the rear suspension.
Fig. 10 is a fourth operation explanatory drawing for explaining the operation of the rear suspension.
Fig. 11 is a fifth operation explanatory drawing for explaining the operation of the rear suspension.
Fig. 12 is a rear view showing the roll-lock mechanism of the motorized three-wheeled vehicle.
Fig. 13 is a rear view showing another configuration of the roll-lock mechanism.
Fig. 14 is a plan view showing the power transmission device of the motorized three-wheeled vehicle.
Fig. 15 is a cross-sectional view of the gear box of the power transmission device.
Fig. 16 is a side view showing the gearing of the gear box.
Fig. 17 is a perspective view showing the torque application mechanism of the roll control device for the motorized three-wheeled vehicle.
Fig. 18 is an operation explanatory drawing for the roll-lock mechanism (the first embodiment), in which Fig. 18(a) is a rear view showing the direction of force acting on the motorized three-wheeled vehicle while executing a turn, and Fig. 18(b) is a flow chart showing the processing by the control circuit of the roll control device.
Fig. 19 is an operation explanatory drawing for the roll-lock mechanism (the second embodiment), in which Fig. 19(a) is a rear view showing the direction of force acting on the motorized three-wheeled vehicle while executing a turn, and Fig. 19(b) is a flow chart showing the processing by the control circuit of the roll control device.

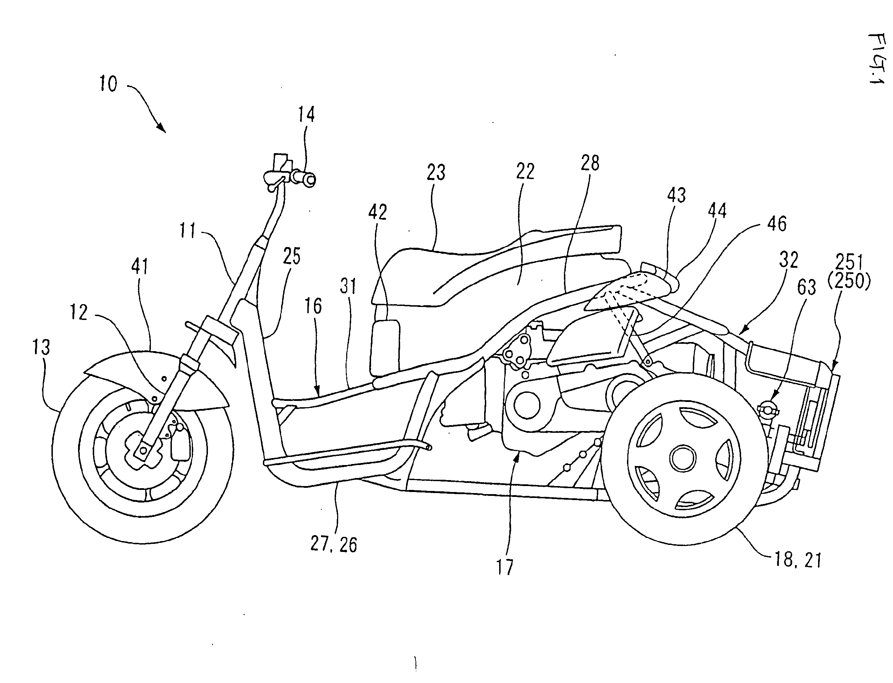

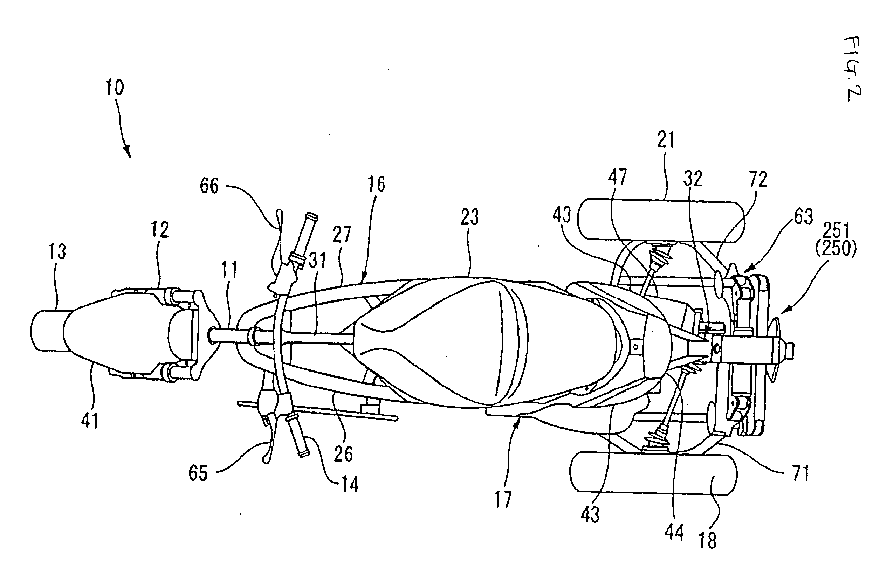

A motorized three-wheeled vehicle 10 (a rolling type vehicle) illustrated in Fig. 1 and Fig. 2 includes: a front fork 12 which is steerably attached to a head pipe 11; a front wheel 13 attached to the lower end of the front fork 12; a handlebar 14 fixedly attached to the front fork 12; a vehicle body 16 attached to the rear of the head pipe 11; a power unit 17 attached to the rear of the vehicle body 16; left and right rear wheels 18, 21 which are driven by the driving force of the power unit 17; a container box 22 attached to the top of the vehicle body 16; and a seat 23 which is operably attached to be opened and closed to the top of the container box 22. A rear brake lever 65 is attached to the left-side of the handlebar 14 and a front brake lever 66 is attached to right-side of the handlebar 14 respectively.

The vehicle body 16 includes: a down pipe 25 which downwardly extends from the head pipe 11; a pair of left and right lower pipes 26, 27 which extends first rearwardly from a lower part of the down pipe 25 and then curves upwardly; a center upper frame 28 joined to the upper ends of the upwardly curved section in the rear parts of the lower pipes 26, 27; a center pipe 31 which rearwardly extends from the down pipe 25 while being joined to the front end of the center upper frame 28; and a rear frame 32 joined respectively to the rear of the lower pipes 26, 27 and the rear of the center upper frame 28.

The container box 22 and the power unit 17 are attached to the center upper frame 28, and a rear suspension 63 which supports the rear wheels 18, 21 is attached to the rear frame 32. The rear suspension 63 includes left and right suspension arms 71, 72 to which the rear wheels 18, 21 are respectively attached. The suspension arms 71, 72 are attached to the vehicle body 16 so as to permit a vertical swinging motion and lateral rolling motion against vehicle body side. That is, the motorized three-wheeled vehicle 10 is made up as a rolling type vehicle in which the vehicle body 16 side (rolling side vehicle body) and the suspension arms 71, 72 side (non-rolling side vehicle body) are allowed to roll laterally relative to each other. A torque application mechanism 251 of a roll control device 250 which controls the relative roll angle between the suspension arms 71, 72 side and the vehicle body 16 side is attached to the rear end of the rear frame 32. Note that the reference numeral 41 denotes a front fender which covers upper part of the front wheel 13, 42 a battery, 43 a turn signal light, 44 a tail lamp, 46 an air cleaner, and 47 a muffler.

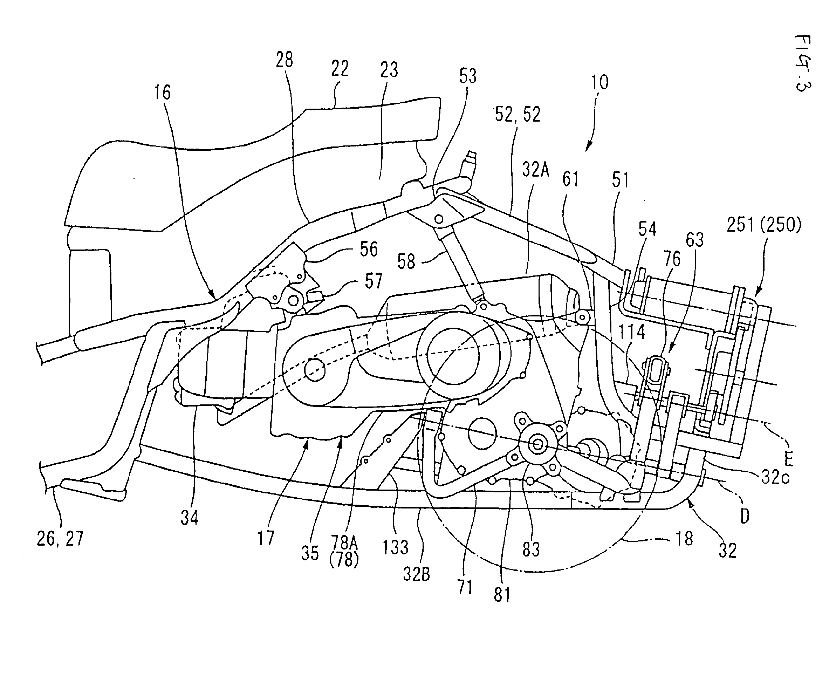

Referring to Fig. 3, the upper part of the rear frame 32 connected to the center upper frame 28 is an upper inclined section 32A which is so arranged as to be higher in the front than in the rear, and the lower part of the rear frame 32 connected to the lower pipes 26, 27 is a lower horizontal section 32B which is arranged nearly horizontally. The rear of the rear frame 32 has an L-shaped pipe 54 which is L-shaped in its side view and so arranged as to extend first downwardly from the upper inclined section 32A and then curves to point rearwardly. The upper end of the L-shaped pipe 54 and the rear ends of the upper inclined section 32A are joined together. Further, a rear curved section 32C which curves upwardly is formed in the rear end of the lower horizontal section 32B, and the upper end of the rear curved section 32C and the rear of the L-shaped pipe 54 are joined. The rear frame 32 made up with these upper inclined sections 32A, the lower horizontal section 32B and the L-shaped pipe 54, along with the rear of the center upper frame 28 and the rear of the lower pipes 26, 27 forms a closed loop structure in a side view.

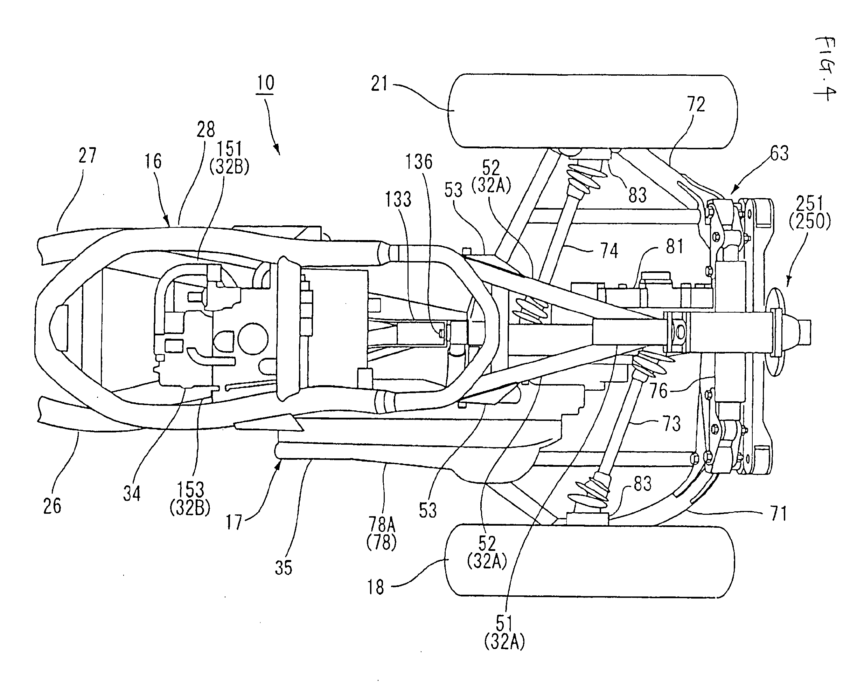

Referring also to Fig. 4, the front part of the upper inclined section 32A is composed of two connecting pipes 52, 52 which are arranged to form a V-shape with its open end facing forwardly in a plan view, and the front ends of respective connecting pipes 52, 52 are joined to the sides of the rear part of the center upper frame 28. The rear ends of the connecting pipes 52, 52 are mutually joined through the center pipe 51 which is arranged centrally in the transverse direction. Reinforcement plates 53, 53 are attached to the underside of the joint sections spanning between the connecting pipes 52, 52 and the center upper frame 28.

The lower horizontal section 32B is formed in a Y-shape in a plan view with the open end facing forwardly by having a first long pipe 151 which extends over the entire length of the lower horizontal section 32B and is bent to the right at a middle section and a second pipe 153 which is joined to the first pipe 151 near its bend. The front ends of the first and second pipes 151, 153 are respectively joined to the lower pipes 26, 27.

Brackets 56, 56 are attached to the center upper frame 28, and the upper front side of the power unit 17 is attached to these brackets 56, 56 through an intermediary member 57. The reinforcement plates 53, 53 support the upper rear side of the power unit 17 respectively through support rods 58, 58. The rear end of the power unit 17 is attached to a protrusion 61 formed on the L-shaped pipe 54. The center upper frame 28 is formed approximately in an oblong shape in a plan view, and the container box 22 having its bottom shape approximately same as said oblong is attached to the top of the center upper frame 28.

The power unit 17 includes: an engine 34 arranged in its front part; and a power transmission 35 which transmits the power from the engine 34 to the rear wheels 18, 21. The power transmission 35 includes: a belt-type variable speed drive 78 which rearwardly extends from the rear left side of the engine 34; a gear box 81 which is connected to the rear of the variable speed drive 78 and doubles as a reduction mechanism; a drive shaft 74 which is connected to a front output shaft of the gear box 81; and a drive shaft 73 which is connected to a rear output shaft of the gear box 81. Note that the reference numeral 78A denotes a speed drive case which contains the variable speed drive 78.

The suspension arms 71, 72 arranged on the left- and right-hand sides of the rear frame 32 are formed in A-shapes in a plan view by connecting, with intermediary members, the middle section of two arm members arranged to separate further from each other toward the transversely inboard side. Holders 83, 83 are attached to the respective suspension arms 71, 72 at an outboard location in a transverse direction, and, to these holders 83, 83, the respective rear wheels 18, 21 are attached. The drive shafts 73, 74 extending from the gear box 81 of the power unit 17 are connected respectively to the rear wheels 18, 21 to transmit the driving force from the engine 34 side through the variable speed drive 78, the gear box 81 and the drive shafts 73, 74 to the rear wheels 18, 21.

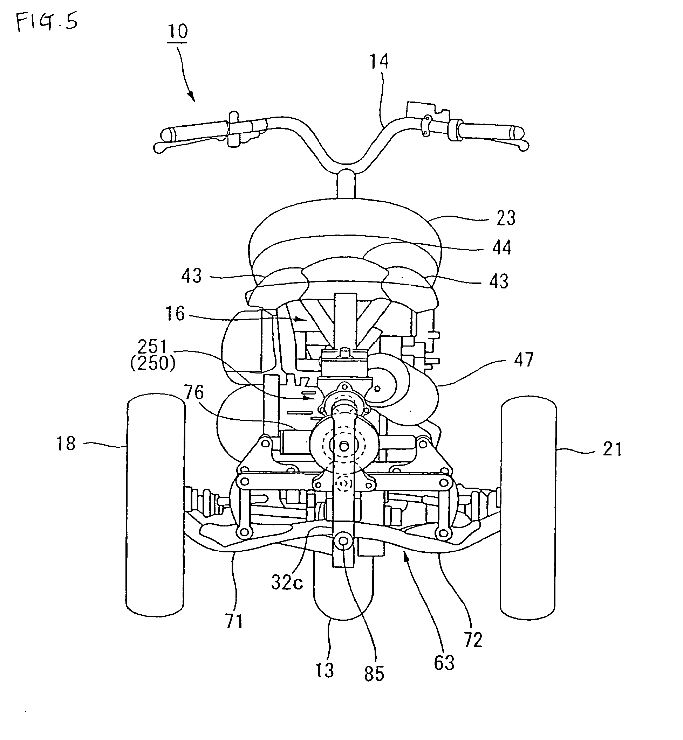

Further referring to Fig. 5 as well, rear inboard portions of the suspension arms 71, 72 are attached to the rear curved section 32C of the rear frame 32 vertically swingably around a rear swing shaft 85. A post 133 is erected in the vicinity of the joint between the first pipe 151 and the second pipe 152 of the rear frame 32, and front inboard portions of the suspension arms 71, 72 are attached to the post 133 vertically swingably around a front swing shaft 136 (See Fig. 4). The rear swing shaft 85 and the front swing shaft 136 are arranged transversely centrally to share the roll axis D which is set higher in the front than in the rear (See Fig. 3).

A shock absorber 76 as an elastic means including a damper 77 and a compression spring, not shown, is arranged above and rear of the suspension arms 71, 72 and nearly parallel with a transverse direction.

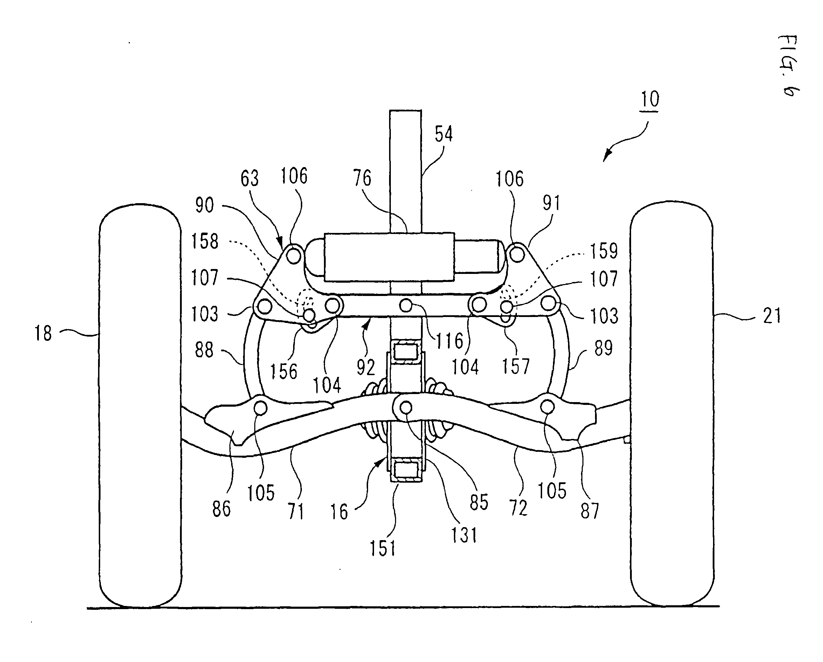

Referring to Fig. 6, on both sides of the shock absorber 76, bell cranks 90, 91 are respectively disposed first extending downwardly and then bending toward the transversely inboard side. The upper ends of the bell cranks 90, 91 and the ends of the shock absorber 76 are respectively pivotally connected to each other by connecting shafts 106, 106 which are parallel with the rear swing shaft 85. Further, a bar-like connecting member 92 is disposed between the transversely inboard ends of the bell cranks 90, 91, and the both ends of the connecting member 92 and the transversely inboard ends of the bell cranks 90, 91 are pivotally connected by connecting shafts 104, 104 which are parallel with the rear swing shaft 85.

The transverse center of the connecting member 92 is pivotally connected to a connecting bracket 114 disposed in the vicinity of the bend of the L-shaped pipe 54, with an upper swing shaft 116 disposed on an upper roll axis E parallel with the roll axis D as its pivot center (See Fig. 3).

Arciform links 88, 89 bulging transversely outwardly are arranged between the bends of the bell cranks 90, 91 and the mounting brackets 86, 87 disposed respectively on the suspension arms 71, 72. The upper ends of the arciform links 88, 89 and the bends of the bell cranks 90, 91 are pivotally connected by connecting shafts 103, 103 which are parallel with the rear swing shaft 85. The lower ends of the arciform links 88, 89 and the mounting brackets 86, 87 for the suspension arms 71, 72 are pivotally connected by connecting shafts 105, 105 which are parallel with the rear swing shaft 85.

The transverse distance between the connecting shafts 103, 103 and the transverse distance between the connecting shafts 105, 105 are approximately same. Assuming that the bell cranks 90, 91, the shock absorber 76, and the connecting member 92 forms a single link and the suspension arms 71, 72 forms another link, these, along with the arciform links 88, 89, form an approximately parallel crank. The bell cranks 90, 91 are constructed in such a manner that respectively two crank plates sandwiches, in reference to the roll axis D, the upper ends of the arciform links 88, 89 and the ends of the shock absorber 76 and the connecting member 92.

Fan-shaped members 156, 157, which are formed in a fan-shape in a rear view, are disposed at both ends of the connecting member 92, and the fan-shaped members 156, 157 are provided respectively with arciform elongate holes 158, 159 with the connecting shaft 104 as their center of curvature. Stopper pins 107, 107 which are respectively fixedly attached to the bell cranks 90, 91 and are parallel with the rear swing shaft 85 are inserted into the arciform elongate holes 158, 159. On account of the stopper pins 107, 107, the inclination between the connecting member 92 and the bell cranks 90, 91 around the connecting shaft 104 is regulated within a certain range.

As described above, the rear suspension 63 comprises the suspension arms 71, 72, the holders 83, 83, the arciform links 88, 89, the bell cranks 90, 91, the shock absorber 76, and the connecting member 92.

Next, the operation of the rear suspension 63 will be described.

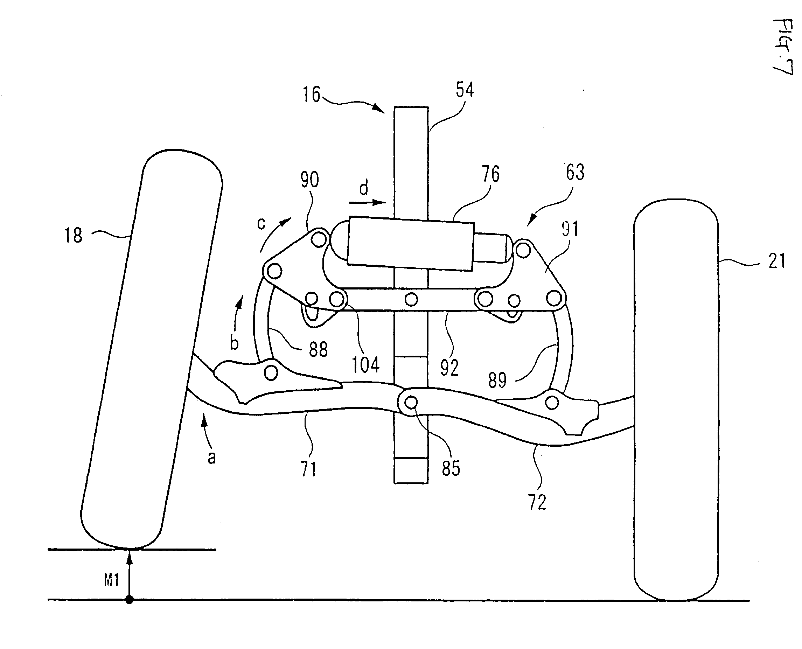

Fig. 6 illustrates a condition in which one occupant (the operator) alone is riding under 1 g condition ("riding condition" hereinafter) and the vehicle body 16 is upright. When the left rear wheel 18 moves upwardly by an amount M1 as shown in Fig. 7 from the aforesaid condition, the suspension arm 71 upwardly swings as shown by the arrow (a) around the rear swing shaft 85, and, following such motion, the arciform link 88 rises as shown by the arrow (b). Further, the bell crank 90 inclines as shown by the arrow (c) relative to the connecting member 92 around the connecting shaft 104 and compresses the shock absorber 76 as shown by the arrow (d). Since the inclination angles of the bell cranks 90, 91 changes in accordance with the inclination angles of the suspension arms 71, 72, that is, the vertical travel of the rear wheels 18, 21, the range of vertical travel of the rear wheels 18, 21 are regulated by the arciform elongate holes 158, 159. On account of the shock absorbing effect of the shock absorber 76, a shock which is conveyed from the left rear wheel 18 to the vehicle body 16 side is attenuated. At this time, the other suspension arm 72 remains in the aforesaid riding condition, and the connecting member 92 holds its nearly horizontal position. That is, the rear suspension 63 is constructed as an independent suspension. Since the operation is same when the right rear wheel 21 rises, the description thereof is omitted.

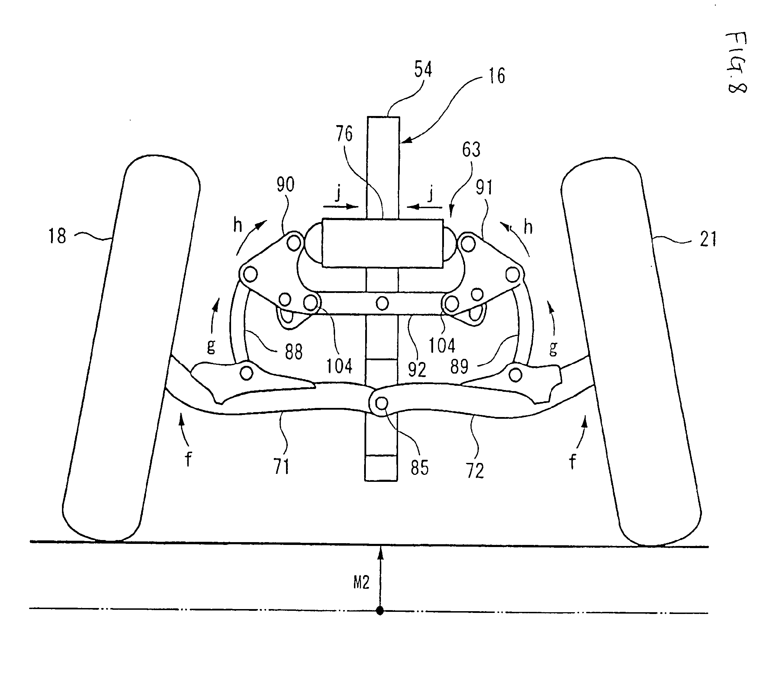

Referring to Fig. 8, when both of the rear wheels 18, 21 rise by an amount M2 from the riding condition, or the vehicle body 16 settles by the amount M2 from the riding condition, the suspension arms 71, 72 swing upwardly around the rear swing shaft 85 as shown by the arrows (f), (f), and, following such motion, the arciform links 88, 89 rise as shown by the arrows (g), (g). The bell cranks 90, 91 then swing relative to the connecting member 92 around the connecting shafts 104, 104 as shown by the arrows (h), (h) to compress the shock absorber 76 as shown by the arrows (j), (j) to gain the shock absorbing effect of the shock absorber 76.

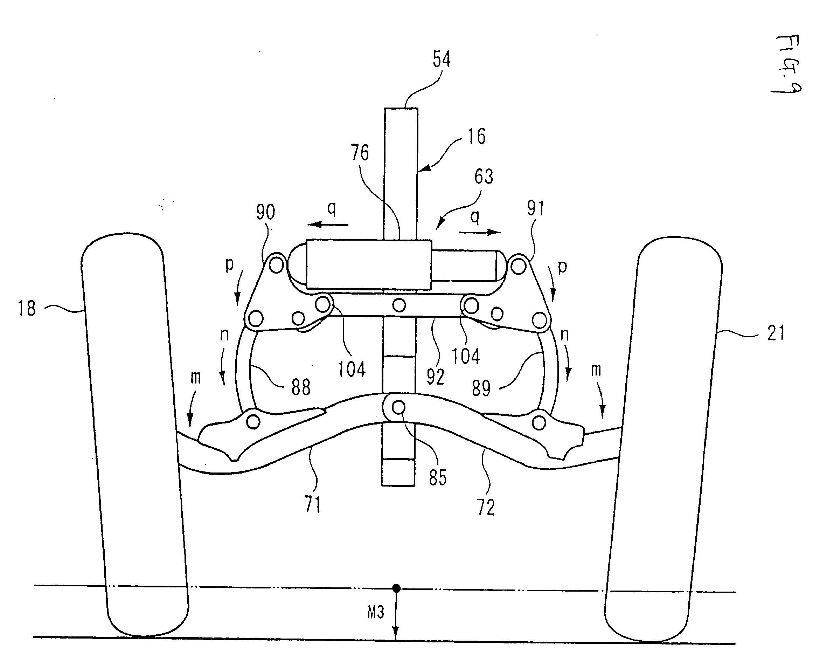

Referring to Fig. 9, when both of the rear wheels 18, 21 moves downwardly by an amount M3 from the riding condition, or the vehicle body 16 rises by the amount M3 from the riding condition, the suspension arms 71, 72 swing downwardly around the rear swing shaft 85 as shown by the arrows (m), (m), and, following such motion, the arciform links 88, 89 move downwardly as shown by the arrows (n), (n). The bell cranks 90, 91 then swing relative to the connecting member 92 around the connecting shafts 104, 104 as shown by the arrows (p), (p) to allow the shock absorber 76 to expand as shown by the arrows (q), (q) to gain the shock absorbing effect of the shock absorber 76.

Next, the rolling motion between the vehicle body 16 side and the suspension arms 71, 72 will be described.

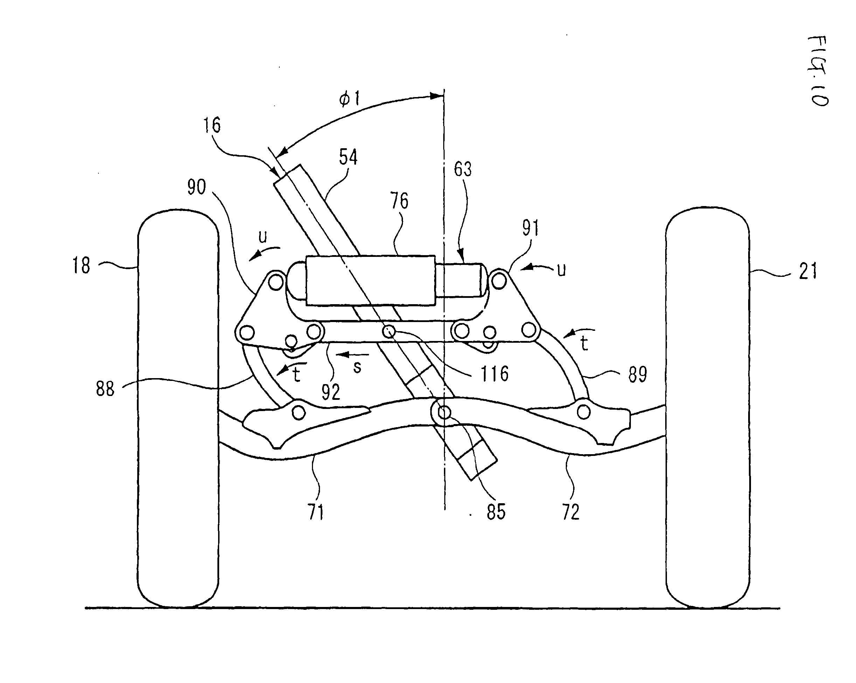

Referring to Fig. 10, when the vehicle body 16 rolls from its upright position to the left by an angle ∅1, it rolls around the rear swing shaft 85 which is also the swing shaft for the suspension arms 71, 72 supporting the rear wheels 18, 21, and the suspension arms 71, 72 do not swing. However, the connecting member 92 which is connected to the L-shaped pipe 54 with the upper swing shaft 116, along with the shock absorber 76, pivots around the upper swing shaft 116 relative to the L-shaped pipe 54 as the connecting member 92 maintains its horizontal position and moves in a translating motion to the left as shown by the arrow (s). The arciform links 88, 89 then become inclined as shown by the arrows (t), (t), and the bell cranks 90, 91 move in a translating motion as shown by the arrows (u), (u). Since the bell cranks 90, 91 move in a translating motion, the distance between their upper ends does not change and the shock absorber 76 becomes neither compressed nor expanded. Since the operation is same when the vehicle body 16 side pivots to the right, the description thereof is omitted.

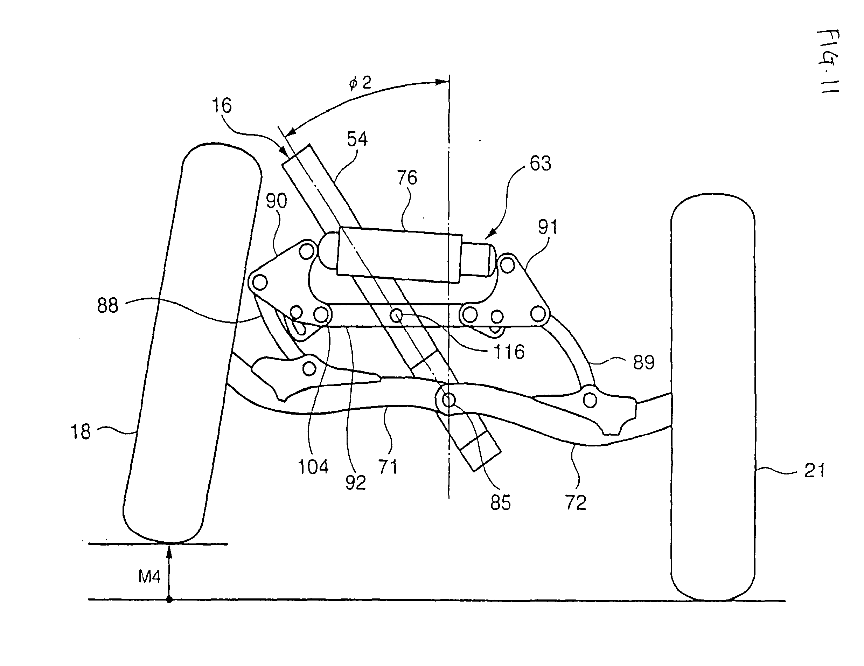

Referring to Fig. 11, when the rear wheel 18 rises by an amount M4 from the aforesaid riding condition and the vehicle body 16 rolls from its upright position to the left by an angle 02, the suspension arm 71 swings upwardly around the rear swing shaft 85 and the connecting member 92 moves to the left along with the shock absorber 76. The arciform links 88, 89 then incline to the left, and, as the suspension arm 71 swings, the arciform link 88 rises. Further, as the bell cranks 90, 91 move to the left, the bell crank 90 swings to the right (clockwise) around the connecting shaft 104 relative to the connecting member 92. The swinging motion of the bell crank 90 compresses the shock absorber 76 to attenuate the shock conveyed from the left rear wheel 18 to the vehicle body 16 side on account of the shock absorbing effect of the shock absorber 76.

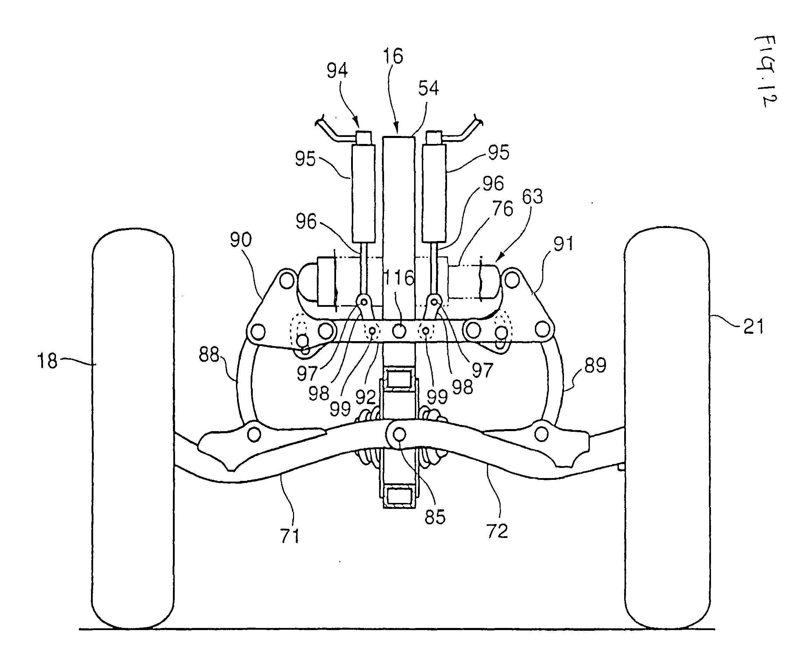

The motorized three-wheeled vehicle 10 is provided with a roll-lock mechanism 94 which regulates the rolling motion between the vehicle body 16 side and the suspension arms 71, 72 side. As one suitable for the embodiment, as shown in Fig. 12, the roll-lock mechanism 94 comprises: a pair of hydraulic cylinders 95, 95 which are fixedly attached to the vehicle body 16 on either side of the L-shaped pipe 54; and intermediary members 98 which are pivotally connected at one end to piston shafts 96 of the hydraulic cylinders 95 by connecting shafts 97 parallel with the upper swing shaft 116. The other ends of the intermediary members 98 and both sides of the connecting member 92 across the upper swing shaft 116 are pivotally connected with connecting shafts 99 which are parallel with the upper swing shaft 116. The hydraulic cylinders 95 are set such that, for normal traveling operations, the piston shafts 96 are allowed to smoothly stroke, but, when a parking lever, not shown, and the like is operated, the stroking of the piston shafts 96 is locked. When the vehicle body 16 side rolls, the L-shaped pipe 54 and the connecting member 92 also rolls, but, by locking such rolling motion by the hydraulic cylinders 95, the rolling motion between the vehicle body 16 side and the suspension arms 71, 72 side can consequently be locked.

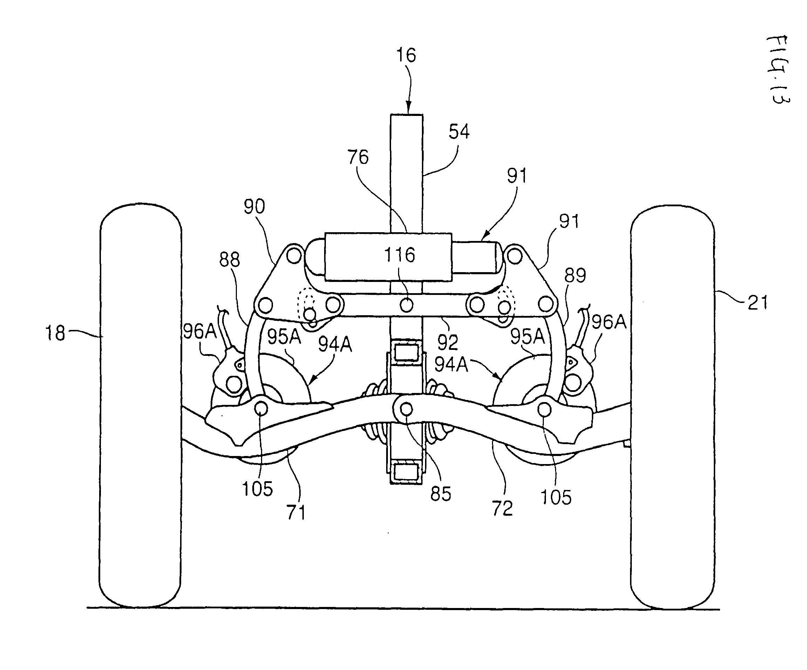

As another mode of the roll-lock mechanism, a roll-lock mechanism 94A as shown in Fig. 13 comprises: brake discs 95A, 95A which are coaxially arranged with the connecting shafts 105, 105 connecting the respective suspension arms 71, 72 and the arciform links 88, 89 and are fixedly attached to the suspension arms 71, 72; and brake calipers 96A, 96A which are disposed correspondingly with the brake discs 95A and are fixedly attached to the arciform links 88, 89 respectively. In this instance, by setting the brake calipers 96A to operate to lock the brake discs 95A only when the parking lever and the like is operated, the rolling motion between the suspension arms 71, 72 and the arciform links 88, 89 is locked. As a result, the rolling motion between the vehicle body 16 side and the rear suspension arms 71, 72 side is locked.

Next, the power unit 17 will be described.

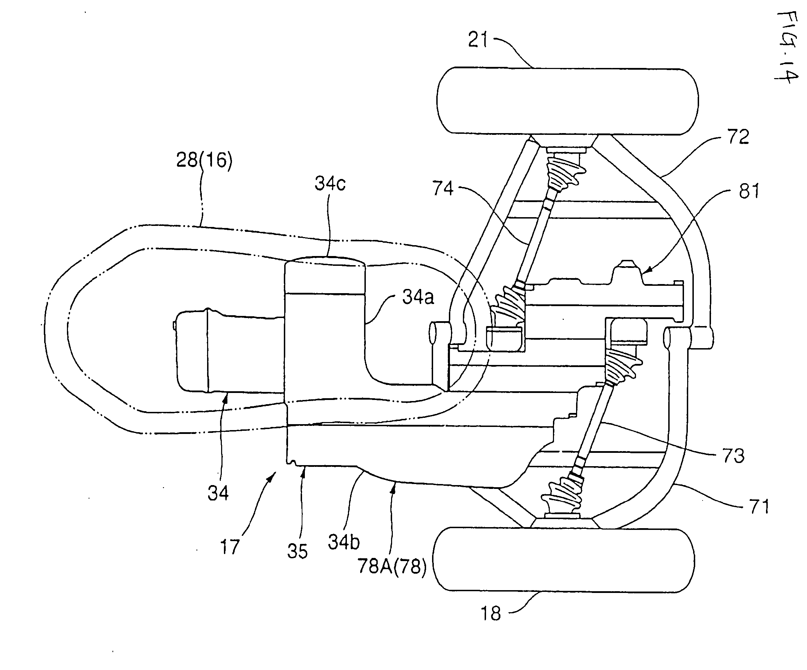

Referring to Fig. 14, the left rear portion of the crankcase 34a of the engine 34 extends rearwardly, and this rearward extension, together with a speed drive cover 34b, forms a speed drive case 78A which contains the variable speed drive 78 of the power transmission 35. A right cover 34c is attached to the right-hand side of the crankcase 34a. The gear box 81, which is a separate unit from the crankcase 34a, is attached to the rear of the crankcase 34a.

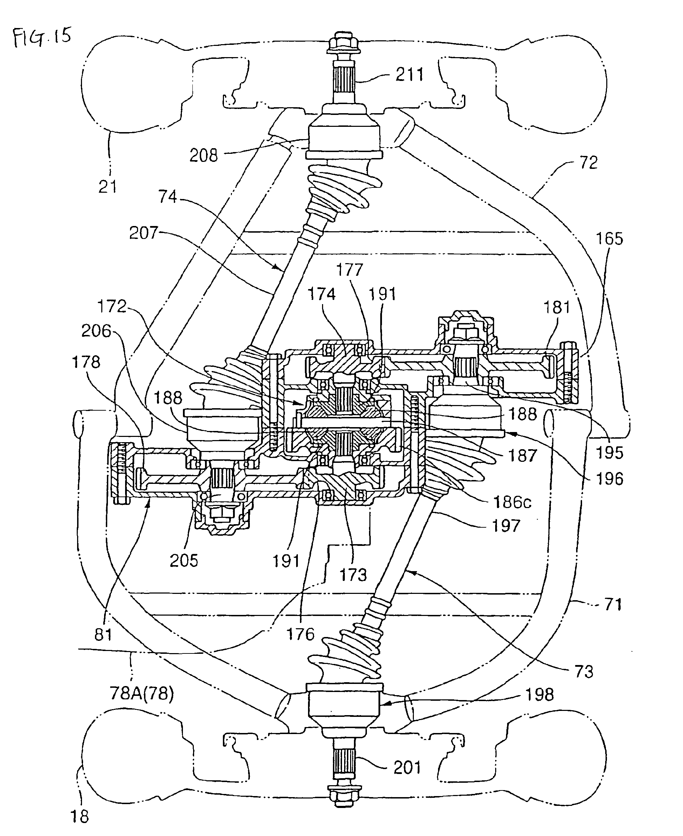

Referring to Fig. 15, the gear box 81 includes: a differential mechanism 172; a first left gear 176 and a first right gear 177 which are respectively formed integrally with a left differential shaft 173 and a right differential shaft 174 that serve as the output shafts of the differential mechanism 172; a second left gear 178 and a second right gear 181 which mesh with the first left gear 176 and the first right gear 177 respectively; and a gear case 165 which contains these gears.

The differential mechanism 172 comprises: a transmission gear 186 which receives power from variable speed drive 78 side; an idle shaft 187 which is arranged in the radial direction of the transmission gear 186 and rotates together with the transmission gear 186; the left differential shaft 173 and the right differential shaft 174 which are coaxially arranged with the transmission gear 186 and face with each other at their one end across the idle shaft 187; pair of first bevel gears 188, 188 provided at both ends of the idle shaft 187; and pair of second bevel gears 191, 191 which are meshed with the first bevel gears 188, 188 that are coupled with the left differential shaft 173 and the right differential shaft 174 through their splines.

When the driving force of the engine 34 is inputted to the differential mechanism 172 through the variable speed drive 78 to cause the idle shaft 187 to rotate together with the transmission gear 186, the second bevel gears 191 are rotated through the first bevel gears 188 at the same speed as the transmission gear 186 to drive the left differential shaft 173 and the right differential shaft 174, which are the output shafts of the differential mechanism 172, if the rotational speed of the rear wheels 18, 21 are same like when the motorized three-wheeled vehicle 10 is traveling straight. If there is a difference in the rotational speeds between the rear wheels 18, 21 like when the motorized three-wheeled vehicle 10 is executing a turn, the first bevel gears 188 rotate around the idle shaft 187 to operate the second bevel gears 191 differentially to cause the left differential shaft 173 and the right differential shaft 174 to be driven at different rotational speeds.

The drive shaft 73 comprises: an inner shaft 195 which is coupled through splines with the second right gear 181 that receives the output from the differential mechanism 172; a center shaft 197 which is connected to the inner shaft 195 through a constant velocity joint 196; and an outer shaft 201 which is connected to the end of the center shaft 197 through a constant velocity joint 198 and is connected to the hub of the left rear wheel 18 through splines.

The drive shaft 74 comprises: an inner shaft 205 which is coupled through splines with the second left gear 178 that receives the output from the differential mechanism 172; a center shaft 207 which is connected to the inner shaft 205 through a constant velocity joint 206; and an outer shaft 211 which is connected to the end of the center shaft 207 through a constant velocity joint 208 and is connected to the hub of the right rear wheel 21 through splines. Note that the inner shaft 195 of the drive shaft 73 is the left output shaft of the gear box 81, and the inner shaft 205 of the drive shaft 74 is the right output shaft of the gear box 81.

In the differential mechanism 172, the idle shaft 187 is disposed approximately in a transverse center, and the left differential shaft 173 and the right differential shaft 174 are disposed approximately coaxially with the rear wheels 18, 21. The right differential shaft 174 and the first right gear 177 are disposed to the right of the idle shaft 187, and the left differential shaft 173 and the first left gear 176 are disposed to the left of the idle shaft 187. The second right gear 181 meshed with the first right gear 177 is disposed to the right rear of the differential mechanism, and the second left gear 178 meshed with the first left gear 176 is disposed to the left front of the differential mechanism.

The constant velocity joint 196 connected through the inner shaft 195 to the second right gear 181 and the constant velocity joint 206 connected through the inner shaft 205 to the second right gear 178 are so arranged that their bending points are located transversely centrally, and oppose with each other across the differential mechanism 172 longitudinally. The drive shaft 73 is arranged at an inclination so that, as it becomes more away to the left from the constant velocity joint 196, it is situated more forwardly, and the drive shaft 74 is so arranged that, as it becomes more away to the right from the constant velocity joint 206, it is situated more rearwardly.

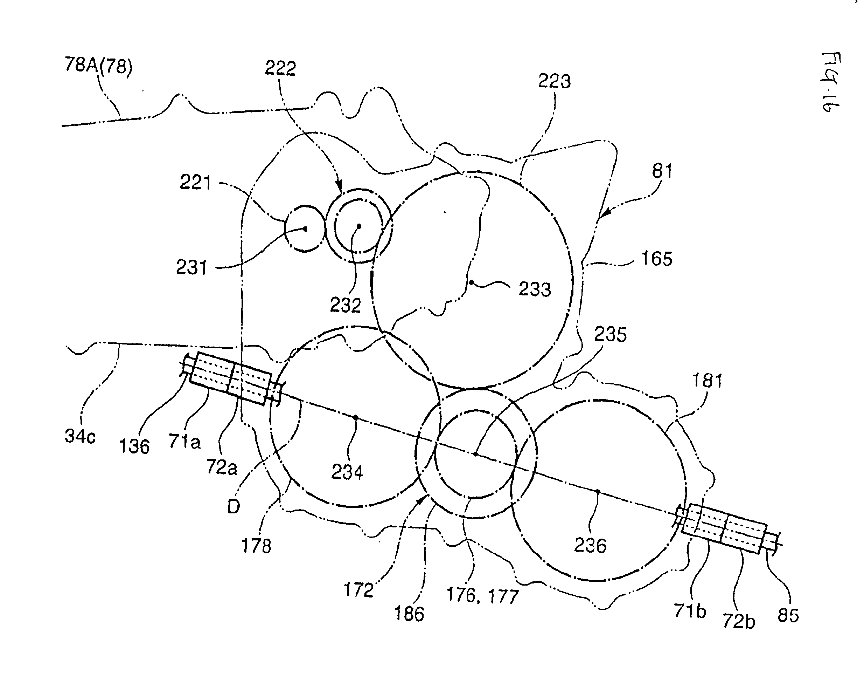

Referring to Fig. 16, the reference numeral 221 denotes a pinion gear 221 attached to the driven side pulley of the variable speed drive 78, and the pinion gear 221 is meshed with a large diameter gear 223 through an intermediary gear 222. At this time, the driving force from the variable speed drive 78 is reduced in speed through the gears 221, 222, 223. The large diameter gear 223 is meshed with the transmission gear 186 of the differential mechanism 172, and the first left gear 176 which coaxially rotates with the transmission gear 186 is meshed with the second left gear 178. Similarly, the first right gear 177 which coaxially rotates with the transmission gear 186 is meshed with the second right gear 181. The differential mechanism 172, the second left gear 177 and the second right gear 181 are disposed lower than the variable speed drive 78.

The rotation center of the transmission gear 186, the second left gear 178, and the second right gear 181 are arranged to overlap the roll axis D in a side view. Because of this, the bending points of the constant velocity joints 196, 206 are located on the roll axis D. Attachment portions 71a, 72a of the suspension arms 71, 72 to the front swing shaft 136 and attachment portions 71b, 72b to the rear swing shaft 85 are disposed to longitudinally oppose with each other across the differential mechanism 172, the second left gear 177 and the second right gear 181.

As described above, since the joint locations between drive shafts 73, 74 and the gear box 81 are longitudinally offset across the differential mechanism 172 relative to the axles (the outer shafts 201, 211) of the rear wheels 18, 21 and are transversely centrally aligned, the swing radius of the drive shafts 73, 74 can be increased in comparison with a case where the joint locations are disposed on the sides of the differential mechanism 172 without increasing the tread between the rear wheels 18, 21 (the distance between the centers of contact patch of the rear wheels with the ground). Therefore, the rear wheel travel can be increased within the allowable range of the bending angle of the constant velocity joints 196, 206 which are respectively disposed between the drive shafts 73, 74 and the gear box 81, and the suspension performance can be improved.

Particularly, since the joint locations (the bending points of the constant velocity joints 196, 206) between the drive shafts 73, 74 and the gear box 81 are aligned with the roll axis D which is the roll center of the vehicle body 16, the drive shafts 73, 74 do not swing even if the vehicle body 16 swings, and the bending angle of the constant velocity joints 196, 206 can be minimized.

Also, since the front and rear attachment portions of the suspension arms 71, 72 are disposed in relatively large spaces present in front of and behind the differential mechanism 172, the second left gear 177 and the second right gear 181 which are located below the variable speed drive 78, it is facilitated to ensure a clearance with the variable speed drive 78 or the gear box 81 when the suspension arms 71, 72 swing vertically or the vehicle body 16 side rolls, allowing to enhance the freedom of design of the independent rear suspension 63.

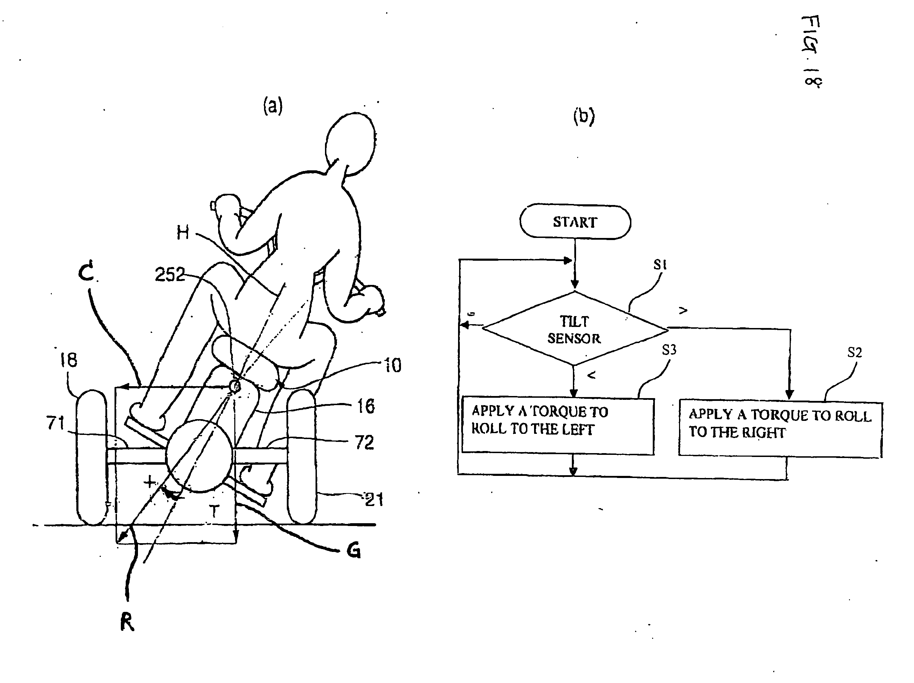

Next, a roll control device 250 will be described. The roll control device (a first embodiment) 250 comprises: a torque application mechanism 251 which is disposed in the rear end of the vehicle body 16; a tilt sensor 252 disposed on the vehicle body 16 side (rolling side vehicle body); and a control circuit, not shown, which controls the operation of the torque application mechanism 251 based on the output from the tilt sensor 252 and others (See Fig. 18).

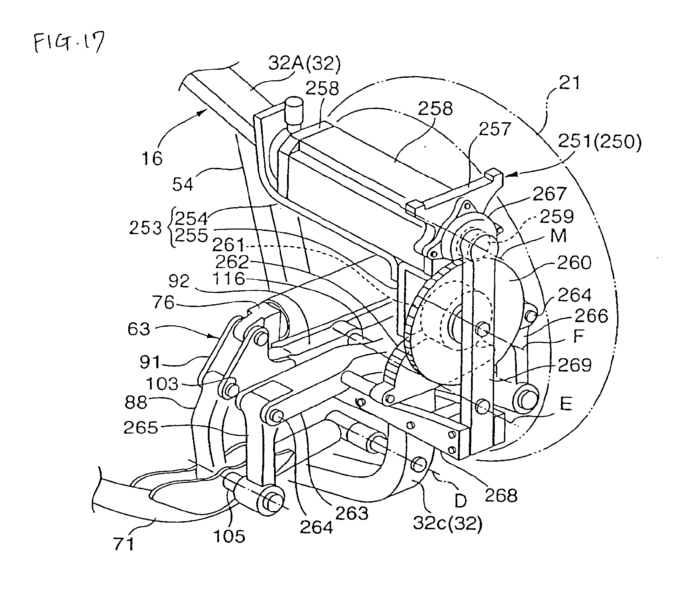

Referring to Fig. 17, a support frame 253 supporting the torque application mechanism 251 is formed, for example, by bending a plate member, and comprises: a motor support rail 254 disposed to be connected with the rear of the upper inclined section 32A of the rear frame 32; and a gear support rail 255 disposed to be connected with the rear curved section 32C of the rear frame 32. The front end of the motor support rail 254 is connected with the rear end of the upper inclined section 32A, and the rear end of the motor support rail 254 is connected with the upper end of the gear support rail 255. The lower end of the gear support rail 255 is connected with the top of the rear curved section 32C. Thus, the support frame 253 is unitarily constructed with the vehicle body 16.

Two vertical walls 256, 257 which are longitudinally spaced apart are erected over the motor support rail 254, and a torque motor (motor) 258 is mounted between these vertical walls 256, 257. The torque motor 258 is so disposed that its drive axis M is parallel with the roll axis D, and its output shaft having a pinion gear 259 protrudes rearwardly from the rear vertical wall 257. A large diameter gear 260 which is disposed below the pinion gear 259 of the torque motor 258 and is meshed with the pinion gear 259 is rotatably supported in the rear of the motor support rail 254. A small diameter gear 261 which is disposed coaxially with and unitarily rotates with the large diameter gear 260 is meshed with a roll gear 262 which is disposed under the small diameter gear 261 and is formed in a semi-circular shape with its round portion pointing upward. The rotation axis F of the large diameter gear 260 and the small diameter gear 261 is parallel with the drive axis M of the torque motor 258.

The roll gear 262 is arranged such that its semi-circular portion on which gear teeth are formed shares the upper roll axis E, and is rotatably supported around the upper roll axis E by the gear support rail 255, and protrusions formed on both sides of the roll gear 262 and a roll arm 263 are unitarily fixed through a collar. The roll arm 263 is a member which is nearly parallel with the connecting member 92 of the rear suspension 63 and is disposed between the connecting member 92 and the gear support rail 255. The transverse center of the roll arm 263 is pivotally connected with the L-shaped pipe 54 and the connecting member 92 around the upper swing shaft 116 which extends rearwardly. Partly referring to Fig. 6, the upper ends of interlocking links 265, 266 are connected to the roll arm 263 at its both ends swingably around rear connecting shafts 264, 264 which are disposed nearly coaxially with the connecting shafts 103, 103 connecting the bell cranks 90, 91 and the arciform links 88, 89. The lower ends of the interlocking links 265, 266 are swingably connected to the rearward extension of the connecting shafts 105, 105 which connect the suspension arms 71, 72 and the arciform links 88, 89.

The rear vertical wall 257 of the motor support rail 255 is fitted with a bowl-like cover member 267 covering the pinion gear 259. Under the roll gear 262, extension rails 268 are provided so as to rearwardly extend the rear end of the L-shaped pipe 54. The extension rails 268 are composed, for example, of two plate members, and are fixedly attached to the rear end of the L-shaped pipe 54 and the top of the rear curved section 32C by transversely sandwiching these components. Between the rear ends of the extension rails 268 and the cover member 267, a sub-rail 269 is provided to rotatably support the large diameter gear 260 and the roll gear 262 from behind.

By the torque application mechanism 251 constructed as described above, the driving torque of the torque motor 258 is reduced in speed by the pinion gear 259 and the large diameter gear 260 to be transmitted to the roll gear 262. When a right-handed (clockwise) torque in a rear view is applied to the large diameter gear 260, the small diameter gear 261 tends to make a right-handed rotation around the upper swing shaft 116 while meshing with the roll gear 262. Since the torque motor 258 and the small diameter gear 261 (the large diameter gear 260) are supported by the support frame 253, and the roll gear 262 is fixedly attached to the roll arm 263 which is connected to the connecting member 92, the right-handed rotation of the small gear 261 around the upper swing shaft 116 acts on the vehicle body 16 (the L-shaped pipe 54) to roll to the right around the upper swing shaft 116 relative to the connecting member 92 and the roll arm 263. As a result, a moment is generated which tends to roll the vehicle body 16 side (rolling side vehicle body) to the right relative to the suspension arms 71, 72 side (non-rolling side vehicle body). Similarly, if a left-handed torque in a rear view is applied to the large diameter gear 260, a moment is generated which tends to roll the vehicle body 16 side to the left relative to the suspension arms 71, 72 side.

The tilt sensor 252 provided on the vehicle body 16 side is formed, for example, as an acceleration sensor which includes in the sensor body a sensing member such as a pendulum magnetized at a certain location at its pivot center. The sensor body contains, for example, a magnetic sensor which detects the magnetic field generated by the magnetized portion of the pendulum so that the tilt angle of the pendulum relative to the sensor body is detected.

The tilt sensor 252 is so arranged as to detect the lateral (rolling) tilt angle, and is fixedly attached to the vehicle body 16 side such that it makes a zero (0) output when the direction of force applied to the vehicle body 16 side relative to the center plane of the vehicle body 16 side (the transversely center plane) is 0°, parallel in other words. Note that the center plane of the vehicle body 16 side is a vertical plane with the vehicle body 16 side standing upright.

While executing a turn, the motorized three-wheeled vehicle 10 rolls the vehicle body 16 side toward the inner side of turn to shift the center of gravity g, which is located on the vertical plane passing the roll axis D while standing upright, toward the inner side of turn. A rolling moment (a falling moment) is thus generated. The vehicle operation is carried out by balancing this rolling moment and another rolling moment toward the outside of turn (a rising moment) which is generated by the centrifugal force acting on the center of gravity g. If the falling moment and the rising moment are balanced out, the center plane of the vehicle body 16 side and the direction of force acting on the vehicle body 16 side become parallel to cause the tilt sensor to output a zero (0) value. If the falling moment and the rising moment are not balanced out, the angle of the direction of force acting on the vehicle body 16 side relative to the center plane of the vehicle body 16 side is detected by the tilt sensor 252 as either a plus or a minus value.

The control circuit which receives the output from the tilt sensor 252 outputs an operating signal to the torque application mechanism 251 in response to the vehicle speed to cause a preprogrammed roll moment to the vehicle body 16 side. The control circuit is a so-called ECU (Electronic Control Unit), and operates by receiving a power supply from a vehicle power source.

The condition under which the control circuit outputs the operating signal to the torque application mechanism 251 is, in the case of this embodiment, a vehicle speed range of approximately 0 to 5 km/h. This is because, if the vehicle speed is higher than 5 km/h, the falling moment by shifting the center of gravity and the rising moment by the centrifugal force can be balanced without finely operating the handlebar and the like.

If the vehicle speed is 0 to 5 km/h, it is hard to balance the falling moment and the rising moment without operating the handlebar and the like, and so, in that case, the relative roll angle of the vehicle body 16 side (the rolling side vehicle body) is controlled to always agree with a targeted angle (See Fig. 18(a) and Fig. 18(b)).

The operation will be described with reference to Fig. 18 (cf the list of reference signs in the appendix).

The motorized three-wheeled vehicle 10 in the process of executing a turn travels, as described above, by balancing the falling moment by shifting the center of gravity of the vehicle body 16 side (the rolling side vehicle body) and the rising moment by the centrifugal force. If these moments are not balanced, a differential moment causes the vehicle body 16 side to roll. In this occasion, the tilt sensor 252 outputs a detected value which is equivalent to the angle, in a longitudinal view, between the direction of the resultant force of gravity and centrifugal force and the center plane H of the vehicle body 16 side.

Referring to Fig. 18(a), when, at the time of executing a turn by rolling the vehicle body 16 side to the right, the direction of the resultant force acting on the sensing member of the tilt sensor 252 has a right-handed angle T relative to the center plane H of the vehicle body 16 side, the tilt sensor 252 outputs a detected value equivalent to this angle as a plus value. If a reverse situation is the case, the output becomes a minus value. If the value detected by the tilt sensor 252 is plus, the vehicle body 16 side is rolled to the right (the vehicle body 16 side is rolled to the falling side, in this drawing) to cause the direction of the resultant force detected by the tilt sensor 252 to be parallel with the center plane H of the vehicle body 16 side. The falling moment and the rising moment are balanced, and so, no force to roll the vehicle body 16 side is generated and the output from the tilt sensor 252 becomes zero (0).

Referring to Fig. 18(b), the control circuit starts the processing of roll control at the same time as the ignition switch, for example, is turned on, and monitors the output value of the tilt sensor 252 with the zero (0) value as the reference (step S1). If the operating condition of the motorized three-wheeled vehicle 10 meets the condition for the control circuit to output an operating signal to the torque application mechanism 251 and the value detected by the tilt sensor 252 is outputted as a plus value, an operating signal is outputted to the torque application mechanism 251 so as to apply a torque to the vehicle body 16 side to roll to the right (step S2). If the value detected by the tilt sensor 252 is outputted as a minus value, an operating signal is outputted to the torque application mechanism 251 so as to apply a torque to the vehicle body 16 side to roll to the left (step S3). The processing is completed once the tilt sensor 252 outputted a zero (0) value, or once the operating signal was outputted to the torque application mechanism 251, and the processing is repeated by again monitoring the output value of the tilt sensor 252.

According to the first embodiment, when the motorized three-wheeled vehicle 10 rolls its vehicle body 16 side to execute a turn, the torque application mechanism 251 suitably applies a roll moment to the vehicle body 16 side to assist the vehicle balancing of the motorized three-wheeled vehicle 10 particularly under low vehicle speed conditions.

Further, by detecting the angle of the direction of force acting on the vehicle body 16 side relative to the center plane of the vehicle body 16 side by means of the tilt sensor 252, and, by adopting the constitution in which, based on the detected angle, the relative roll angle between the vehicle body 16 side and the suspension arms 71, 72 side is controlled, the relative roll angle can be better controlled without being affected by the inclination of ground surface. Moreover, since the rolling motion of the vehicle body 16 side is not regulated, and the rear suspension 63 is formed as an independent suspension, the inclination or bumps of the ground surface at the time of executing a turn can be flexibly managed.

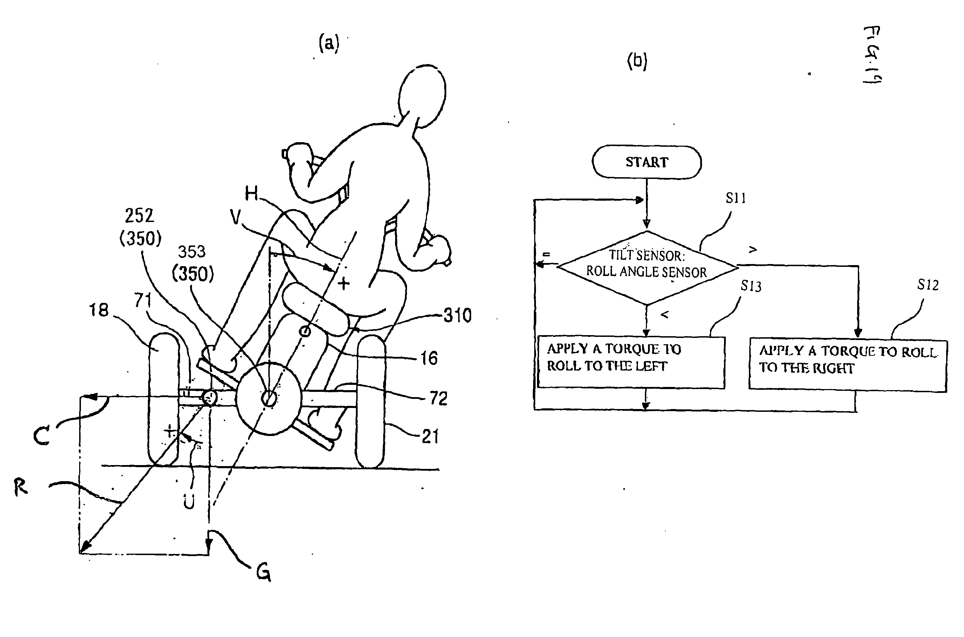

Next, referring to Fig. 19, a second embodiment of the present invention will be described (cf the list of reference signs in the appendix).

A motorized three-wheeled vehicle (a rolling type vehicle) 310 according to this embodiment is different only in that the aforesaid roll control device 250 is replaced with a roll control device 350, and, hence, the same reference numerals are given to the same parts and the description of them are omitted. The roll control device 350 comprises: the torque application mechanism 251 disposed in the rear end of the vehicle body 16; the tilt sensor (acceleration sensor) 252 disposed on the suspension arms 71, 72 side (non-rolling side vehicle body); a roll angle sensor 353 which detects a relative roll angle between the vehicle body 16 side and the suspension arms 71, 72 side; and a control circuit, not shown, which, upon receiving the outputs from the roll angle sensor 353 and the tilt sensor 252 and the like, controls the operation of the torque application mechanism 251.

The tilt sensor 252 is disposed, for example, on the suspension arm 71, and is so set as to output a zero (0) value for a condition where the angle between the direction of force acting on the suspension arm 71 and the suspension arm 71 itself is, for example, 90°, that is, a condition where the direction of force acting on the suspension arms 71, 72 side and the direction vertical to the suspension arms 71, 72 side are parallel. The roll angle sensor 353 is disposed on the vehicle body 16 side, and so set as to output a zero (0) value for a condition where the center plane H of the vehicle body 16 side is parallel with the direction vertical to the suspension arms 71, 72 side.

The operation is as follows: when, at the time of executing a turn, the motorized three-wheeled vehicle 310 travels as the vehicle body 16 side is rolled to balance the falling moment and the rising moment, the relative roll angle between the vehicle body 16 side and the suspension arms 71, 72 side is detected by the roll angle sensor 353, and the angle of the direction of the resultant force of the centrifugal force and gravity acting on the suspension arms 71, 72 side is detected by the tilt sensor 252. Since gravity and the centrifugal force acting on the vehicle body 16 side act likewise on the sensing member of the tilt sensor 252 disposed on the suspension arm 71, the direction of force acting on the vehicle body 16 side agrees with the center plane H of the vehicle body 16 side (the rolling side vehicle body) if the relative roll angle and the angle of direction of the resultant force are same, and the falling moment and the rising moment become balanced. If the angles do not agree, the differential moment causes the vehicle body 16 side to roll.

Referring to Fig. 19(a), when, at the time of executing a turn by rolling the vehicle body 16 side to the right, the direction of the resultant force of the centrifugal force and gravity acting on the tilt sensor 252 has a right-handed angle U, for example, relative to the vertical direction of the suspension arms 71, 72 side, the tilt sensor 252 outputs a detected value equivalent to this angle as a plus value. If the vehicle body 16 side has a right-handed angle V, for example, relative to the suspension arms 71, 72 side, the roll angle sensor 353 outputs a detected value equivalent to this angle as a plus value. If the output value by the tilt sensor 252 is greater than the relative roll angle V detected by the roll angle sensor 353, the vehicle body 16 side is rolled to the right to align the direction of the resultant force and the center plane H of the vehicle body 16 side. The falling moment and the rising moment then balance out, and there will be no force to roll the vehicle body 16 side.

Referring to Fig. 19(b), when the control circuit starts the processing of roll control, the value detected by the tilt sensor 252 and the value detected by the roll angle sensor 353 are first compared (Step S 11). If the operating condition of the motorized three-wheeled vehicle 310 meets the condition for the control circuit to output the operating signal to the torque application mechanism 251 and the value detected by the tilt sensor 252 is greater than the value detected by the roll angle sensor 353, the operating signal is outputted to the torque application mechanism 251 so as to apply a torque to the vehicle body 16 side to roll to the right (step S12). If the value detected by the tilt sensor 252 is smaller than the value detected by the roll angle sensor 353, an operating signal is outputted to the torque application mechanism 251 so as to apply a torque to the vehicle body 16 side to roll to the left (step S13). The processing is completed once the value detected by the tilt sensor 252 agreed with the value detected by the roll angle sensor 353, or once the operating signal was outputted to the torque application mechanism 251, and the processing is repeated by again comparing the output of the tilt sensor 252 with the output of the roll angle sensor 353.

When the motorized three-wheeled vehicle 310 executes a turn on an inclined ground surface, the tilt of the suspension arms 71, 72 side either to the left or the right will cause the angle of the direction of the resultant force of the centrifugal force and gravity detected by the tilt sensor 252 to increase or to decrease by that amount. However, because the relative roll angle detected by the roll angle sensor 353 also increases or decreases by the amount of the tilt of the suspension arms 71, 72 side either to the left or the right, the effect of the inclination of ground surface is cancelled out at the time of comparing the values detected by these sensors 252, 353 to allow the same roll control as in the case of executing a turn on the level ground.

According to the second embodiment, similarly to the first embodiment, the torque application mechanism 251 suitably applies a roll moment to the vehicle body 16 side to assist the vehicle balancing of the motorized three-wheeled vehicle 310 particularly under low vehicle speed conditions.

Further, by detecting the angle between the vertical direction relative to the suspension arms 71, 72 side and the direction of force acting on the suspension arms 71, 72 side as well as detecting the relative roll angle between the suspension arms 71, 72 side and the vehicle body 16 side, and, by adopting a constitution in which, based on these detected angles, the relative roll angle between the vehicle body 16 side and the suspension arms 71, 72 side is controlled, the relative roll angle can be better controlled without being affected by the inclination of ground surface. Moreover, since the rolling motion of the vehicle body 16 side is not regulated, and the rear suspension 63 is formed as an independent suspension, the inclination or bumps of the ground surface can be flexibly managed at the time of executing a turn.

The invention is not limited to the afore-described embodiments. For example, for a power source for the torque application mechanism 251, a hydraulic mechanism and others, instead of the torque motor 258, can be used. Further, not limiting to low-speed operating conditions, but the relative roll angle may be so set as to be controlled in mid- or high-speed operating conditions as well. A completely active control in which the relative roll angle is automatically set depending on the operating conditions without the need of body weight shift by the operator is also possible. Still further, the rolling type vehicle is not limited only to three-wheeled vehicles but also is adaptable to four-wheeled vehicles. It is also adaptable to those which have suspension arms on the front wheel side.

List of reference signs used in Fig 18:
Fig. 18(a):
   - C: Centrifugal force
   - G: Gravity
   - R: Resultant force
Fig. 18(b):
   - S1: Tilt sensor
   - S2: Apply a torque to roll to the left
   - S3: Apply a torque to roll to the right

List of reference signs used in Fig 19:
Fig. 19(a):
   - C: Centrifugal force
   - G: Gravity
   - R: Resultant force
Fig. 19(b):
   - S11: Tilt sensor: roll angle sensor
   - S12: Apply a torque to roll to the right
   - S13: Apply a torque to roll to the left

## Claims

1. A roll control device for a three-wheeled or four-wheeled rolling type vehicle (10, 310) having a front vehicle body and a rear vehicle body which roll relative to each other in lateral direction,
**characterized in that**:
the angle of force acting on a non-rolling side vehicle body (16) is detected by a tilt sensor (252) which is to be disposed on said non-rolling side vehicle body (16), wherein said force is the resultant force of gravity and the centrifugal force acting on any of the rolling side vehicle body (16) and the non-rolling vehicle body (16),
the relative roll angle between the non-rolling side vehicle body (16) and the rolling side vehicle body (16) is detected by a roll angle sensor (353) which is to be disposed on said rolling side vehicle body (16), and
based on the detected force angle and the relative roll angle which are controlled by means of a control circuit, the force angle relative to the centre plane (H) of the rolling side vehicle body (16) becomes zero (0) by means of a torque application mechanism.

2. A roll control device for a three-wheeled or four-wheeled rolling type vehicle (10, 310) having a front vehicle body and a rear vehicle body which roll relative to each other in lateral direction,
**characterized in that**:
the angle of force acting on a rolling side vehicle body (16) is detected by a tilt sensor (252) which is to be disposed on said rolling side vehicle body (16), wherein said force is the resultant force of gravity and the centrifugal force acting on any of the rolling side vehicle body (16) and the non-rolling vehicle body (16), and
based on the detected force angle used as zero (0) reference value, the rolling side vehicle body (16) is controlled by means of a control circuit so that the centre plane (H) of the rolling side vehicle body (16) becomes parallel with the zero (0) reference value by means of a torque application mechanism.

3. The roll control device for a rolling type vehicle (10, 310) according to claim 1 or claim 2, wherein
a motor (258) to control the relative roll angle between the rolling side vehicle body (16) and the non-rolling side vehicle body (16) is provided between them.

4. The roll control device for a rolling type vehicle (10, 310) according to claim 1 or claim 2, wherein
the relative roll angle is controlled while the rolling type vehicle is travelling at a low speed.

## Patentansprüche

1. Rollsteuervorrichtung für ein Dreirad- oder Vierradfahrzeug (10, 310) mit Rollbewegung mit einem vorderen Fahrzeugaufbau und einem hinteren Fahrzeugaufbau, die relativ zueinander in Querrichtung rollen,
**dadurch gekennzeichnet, dass**:
der Winkel der Kraft, die auf eine nicht rollende Seite des Fahrzeugaufbaus (16) einwirkt, durch einen Neigungssensor (252) detektiert wird, der auf der nicht rollenden Seite des Fahrzeugaufbaus (16) anzuordnen ist, worin die Kraft die resultierende Kraft aus Erdanziehungs- und Zentrifugalkraft ist, die auf die rollende Seite des Fahrzeugaufbaus (16) sowie die nicht rollende Seite des Fahrzeugaufbaus (16) einwirkt,
der relative Rollwinkel zwischen der nicht rollenden Seite des Fahrzeugaufbaus (16) und der rollenden Seite des Fahrzeugaufbaus (16) durch einen Rollwinkelsensor (353) detektiert wird, der auf der rollenden Seite des Fahrzeugaufbaus (16) anzuordnen ist, und
basierend auf dem detektierten Kraftwinkel und dem relativen Rollwinkel, die mittels eines Steuerkreises gesteuert werden, der Kraftwinkel relativ zur Mittelebene (H) der rollenden Seite des Fahrzeugaufbaus (16) unter Verwendung eines Drehmomentausübungsmechanismus Null (0) wird.

2. Rollsteuervorrichtung für ein Dreirad- oder Vierradfahrzeug (10, 310) mit Rollbewegung mit einem vorderen Fahrzeugaufbau und einem hinteren Fahrzeugaufbau, die relativ zueinander in Querrichtung rollen,
**dadurch gekennzeichnet, dass**:
der Winkel der Kraft, die auf eine rollende Seite des Fahrzeugaufbaus (16) einwirkt, durch einen Neigungssensor (252) detektiert wird, der auf der rollenden Seite des Fahrzeugaufbaus (16) anzuordnen ist, worin die Kraft die resultierende Kraft aus Erdanziehungs- und Zentrifugalkraft ist, die auf die rollende Seite des Fahrzeugaufbaus (16) sowie die nicht rollende Seite des Fahrzeugaufbaus (16) einwirkt, und
basierend auf dem detektierten Kraftwinkel, der als Referenzwert Null (0) verwendet wird, die rollende Seite des Fahrzeugaufbaus (16) mittels eines Steuerkreises gesteuert wird, so dass die Mittelebene (H) der rollenden Seite des Fahrzeugaufbaus (16) unter Verwendung eines Drehmomentausübungsmechanismus parallel zum Null-(0)-Referenzwert wird.

3. Rollsteuervorrichtung für ein Fahrzeug (10, 310) mit Rollbewegung gemäß Anspruch 1 oder Anspruch 2, worin ein Motor (258) zur Steuerung des relativen Rollwinkels zwischen der rollenden Seite des Fahrzeugaufbaus (16) und der nicht rollenden Seite des Fahrzeugaufbaus (16) zwischen diesen bereitgestellt ist.

4. Rollsteuervorrichtung für ein Fahrzeug (10, 310) mit Rollbewegung gemäß Anspruch 1 oder Anspruch 2, worin der relative Rollwinkel gesteuert wird, während das Fahrzeug mit Rollbewegung mit einer niedrigen Geschwindigkeit fährt.

## Revendications

1. Système de commande de roulis pour un véhicule du type à roulis à trois roues ou à quatre roues (10, 310) comportant un cadre avant de véhicule et un cadre arrière de véhicule qui roulent l'un par rapport à l'autre dans la direction latérale,
**caractérisé en ce que** :
l'angle d'une force agissant sur un cadre de véhicule (16) de côté qui ne roule pas est détecté par un capteur d'inclinaison (252) qui est destiné à être disposé sur ledit cadre de véhicule (16) de côté qui ne roule pas, dans lequel ladite force est la force de gravité résultante et la force centrifuge agissant sur l'un quelconque du cadre de véhicule (16) de côté qui roule et du cadre de véhicule (16) qui ne roule pas,
l'angle de roulis relatif entre le cadre de véhicule (16) de côté qui ne roule pas et le cadre de véhicule (16) de côté qui roule est détecté par un capteur d'angle de roulis (353) qui est destiné à être disposé sur ledit cadre de véhicule (16) de côté qui roule, et
sur la base de l'angle de force et de l'angle de roulis relatif détectés qui sont commandés au moyen d'un circuit de commande, l'angle de force par rapport au plan central (H) du cadre de véhicule (16) de côté qui roule devient nul (0) au moyen d'un mécanisme d'application de couple.

2. Dispositif de commande de roulis pour un véhicule du type à roulis à trois roues ou à quatre roues (10, 310) comportant un cadre avant de véhicule et un cadre arrière de véhicule qui roulent l'un par rapport à l'autre dans la direction latérale,
**caractérisé en ce que** :
l'angle de la force agissant sur un cadre de véhicule (16) de côté qui roule est détecté par un capteur d'inclinaison (252) qui est destiné à être disposé sur ledit cadre de véhicule (16) de côté qui roule, dans lequel ladite force est la force de gravité résultante et la force centrifuge agissant sur l'un quelconque du cadre de véhicule (16) de côté qui roule et du cadre de véhicule (16) qui ne roule pas, et
sur la base de l'angle de force détecté utilisé en tant que valeur de référence nulle (0), le cadre de véhicule (16) de côté qui roule est commandé au moyen d'un circuit de commande de sorte que le plan central (H) du cadre de véhicule (16) de côté qui roule devienne parallèle à la valeur de référence nulle (0) au moyen d'un mécanisme d'application de couple.

3. Dispositif de commande de roulis pour un véhicule du type à roulis (10, 310) selon la revendication 1 ou la revendication 2, dans lequel
un moteur (258) pour commander l'angle de roulis relatif entre le cadre de véhicule (16) de côté qui roule et le cadre de véhicule (16) de côté qui ne roule pas est prévu entre ceux-ci.

4. Dispositif de commande de roulis pour un véhicule du type à roulis (10, 310) selon la revendication 1 ou la revendication 2, dans lequel
l'angle de roulis relatif est commandé alors que le véhicule du type à roulis se déplace à faible vitesse.
